# FASCICULE DE BREVET EUROPEEN

(11) **EP 0 443 888 B1**
(45) Date de publication et mention de la délivrance du brevet: **18.05.1994**
(21) Numéro de dépôt: 91400133.4
(22) Date de dépôt: 22.01.1991
(51) Int. Cl.: B65B 3/32, B65B 3/36, G01F 11/02

(54) **Doseur-distributeur et procédé de dosage d'un produit pâteux et/ou liquide**
Dosier- und Abgabevorrichtung und Dosierverfahren für ein pastöses oder flüssiges Produkt
Dosing-dispensing device and method for a pasty or liquid product

(30) Priorité: 23.01.1990 FR 9000758
(43) Date de publication de la demande: 28.08.1991
(60) Demande divisionnaire: 93401990.2
(73) Titulaire: JAGENBERG Aktiengesellschaft, D-40476 Düsseldorf (DE)
(72) Inventeur: Torterotot, Roland, F-78730 Longvilliers (FR)
(74) Mandataire: Hasenrader, Hubert

(56) Documents cités:
- EP-A- 0 269 507
- DE-A- 2 835 460
- FR-A- 2 601 327

## Description

La présente invention se rapporte à un doseur-distributeur servant à distribuer des doses déterminées d'au moins un produit pâteux et/ou liquide contenu sous pression dans au mions un premier réservoir de stockage.

Un doseur-distributeur visé par la présente invention comporte un bloc-doseur dans l'enceinte duquel sont prévues, d'une part, une chambre supérieure d'alimentation raccordée par une conduite d'alimentation audit premier réservoir, et, d'autre part, une chambre inférieure de dosage séparée de ladite chambre d'alimentation par un piston-doseur qui est fixé à l'extrémité inférieure d'un étrier de support solidaire, à son autre extrémité, de l'extrémité inférieure d'un premier tube de commande pénétrant de façon étanche dans ladite première enceinte. Ce piston-doseur coulisse de façon étanche dans la première enceinte et est muni d'un passage central obturable par une soupape d'admission dont l'organe d'obturation, tel qu'un clapet, est porté par l'extrémité libre d'un deuxième tube ou tige de commande dépassant de façon étanche de l'extrémité inférieure du premier tube de commande et associé à des moyens de commande distincts du dispositif de commande du premier tube de commande. Ce deuxième tube est sollicité par un ressort de rappel en direction de la fermeture de la soupape d'admission, est guidé par rapport audit piston-doseur et coopère avec un siège de soupape entourant ledit passage central du piston-doseur. Le doseur-distributeur comporte également au moins un bloc distributeur comprenant une chambre de distribution dont l'entrée est raccordée à la sortie de la chambre de dosage et dont la sortie est raccordée à au moins une tubulure d'éjection, ainsi qu'une soupape d'éjection dont l'organe d'obturation, tel qu'un clapet ou membrane, coopère avec l'extrémité amont de chaque tubulure d'éjection, extrémité constituant le siège de ladite soupape d'éjection et est associé à une unité de commande.

Un tel doseur-distributeur est décrit dans la demande de brevet français FR-A-89 06 316 du 12 mai 1989, correspondant à EP-A-0 397 578, publié le 14.11.90.

Il s'est avéré qu'il est difficile de distribuer avec un tel doseur-distributeur des doses de produit très précises d'une dose à l'autre dès que chaque dose ne représente qu'une faible quantité pour laquelle l'imprécision normale du doseur-distributeur dépasse 1 à 2 % en poids de la dose de référence prédéterminée. Cet inconvénient se manifeste lorsque les récipients d'une rangée de récipients doivent être remplis simultanément avec des doses de produit identiques d'un récipient à l'autre, à l'aide d'un ensemble de doseurs-distributeurs présentant autant de doseurs-distributeurs qu'il y a de récipients dans une rangée de récipients. On peut certes réaliser des doseurs-distributeurs dont les chambres de dosage et les pistons-doseurs présentent tous les mêmes dimensions, mais une telle fabrication entraîne un prix de revient prohibitif.

Un but de l'invention consiste à supprimer ou tout au moins atténuer ces inconvénients.

Dans le cadre d'un doseur-distributeur du type mentionné ci-dessus, ce but est atteint du fait que
- un bloc doseur unique est associé à au moins deux blocs distributeurs,
- la sortie de la chambre de dosage du bloc doseur unique est raccordée en parallèle à chacune des chambres de distribution d'au moins deux blocs distributeurs,
- le volume actif de la chambre de dosage du bloc doseur unique, volume balayé régulièrement par le piston-doseur pendant la course d'aspiration et la course de refoulement de celui-ci, correspond à au moins deux doses entières de produit à distribuer à travers au moins deux blocs distributeurs distincts, et du fait qu'il comporte un dispositif de synchronisation qui coordonne les mouvements du premier tube de commande et du second tube de commande du piston-doseur, lors d'une même course de refoulement de ce dernier, avec l'unité de commande de la soupape d'éjection de chacun des blocs distributeurs, de telle sorte que, pendant le refoulement d'une première dose de produit hors de la chambre de dosage du bloc doseur unique, ne soit ouverte que la soupape d'éjection du premier bloc distributeur, que pendant le refoulement de la deuxième dose de produit, ne soit ouverte que la soupape d'éjection du deuxième bloc distributeur, et ainsi de suite, jusqu'à ce que tous les blocs distributeurs aient débité chacun une dose de produit pendant la même course de refoulement du piston-doseur du bloc doseur unique.

Grâce à cette conception, les effets néfastes des imprécisions normalement tolérées dans la fabrication du doseur-distributeur sont supprimés ou tout au moins atténués par le réglage précis des doses de produit à l'aide de la soupape d'éjection de chacun des blocs distributeurs associés à un même et unique bloc doseur, le temps d'ouverture de la soupape d'éjection d'un bloc distributeur déterminant exactement la quantité d'une dose de produit pendant que simultanément sont maintenues fermées les soupapes d'éjection des autres blocs distributeurs associés au même bloc doseur.

L'invention vise également un procédé de dosage d'un produit pâteux et/ou liquide, contenu sous pression dans au moins un premier réservoir de stockage, procédé qui permet d'utiliser un doseur-distributeur dont la précision mécanique, tout en restant dans les tolérances habituelles, permet de réaliser des doses de produit très précises d'une dose à l'autre, notamment lorsque ces doses doivent être débitées quasi-simultanément dans les récipients d'une même rangée de récipients.

Ce procédé de dosage est mis en oeuvre à l'aide d'un doseur-distributeur du type comportant dans l'enceinte cylindrique d'un bloc doseur, d'une part, une chambre supérieure d'alimentation raccordée par une conduite d'alimentation audit premier réservoir, et, d'autre part, une chambre inférieure de dosage séparée de ladite chambre d'alimentation par un piston-doseur qui est fixé à l'extrémité inférieure d'un étrier de support solidaire, à son autre extrémité, de l'extrémité inférieure d'un premier tube de commande pénétrant de façon étanche dans ladite première enceinte, qui coulisse de façon étanche dans ladite première enceinte, et qui est muni d'un passage central obturable par une soupape d'admission dont l'organe d'obturation, tel qu'un clapet, est porté par l'extrémité libre d'un deuxième tube ou tige de commande dépassant de façon étanche de l'extrémité inférieure du premier tube de commande et associé à des moyens de commande distincts du dispositif de commande du premier tube de commande, ce deuxième tube étant sollicité par un ressort de rappel en direction de la fermeture de la soupape d'admission et étant guidé par rapport audit piston et coopèrant avec un siège de soupape entourant ledit passage central, au moins un bloc distributeur comprenant une chambre de distribution dont l'entrée est raccordée à la sortie de la chambre de dosage et dont la sortie est raccordée à au moins une tubulure d'éjection, ainsi qu'une soupape d'éjection dont l'organe d'obturation, tel qu'un clapet ou membrane, coopère avec l'extrémité amont de chaque tubulure d'éjection, extrémité constituant le siège de ladite soupape d'éjection et est associé à une unité de commande. Dans ce doseur-distributeur, le bloc doseur unique est associé à au moins deux blocs distributeurs, la sortie de la chambre de dosage est raccordée en parallèle à chacune des chambres de distribution d'au moins deux blocs distributeurs, et le volume actif de la chambre de dosage du bloc doseur unique, volume balayé régulièrement par le piston-doseur pendant la course d'aspiration et la course de refoulement de celui-ci, correspond à au moins deux doses entières de produit à distribuer à travers au moins deux blocs distributeurs distincts.

Dans le cadre d'un tel doseur-distributeur, le procédé de dosage est caractérisé en ce que, pendant la même course de refoulement du piston distributeur, on refoule une première dose de produit à travers un premier bloc distributeur en ouvrant la soupape d'éjection de ce dernier et en maintenant fermées les soupapes d'éjection des autres blocs distributeurs, puis on refoule une deuxième dose de produit à travers un deuxième bloc distributeur en ouvrant la soupape d'éjection de ce dernier, et en fermant ou en maintenant fermées les soupapes d'éjection des autres blocs distributeurs, et ainsi de suite jusqu'à la fin de la course maximale de refoulement du piston-doseur.

Grâce à cette conception, on peut réaliser quasi-simultanément, et avec une très grande précision, plusieurs petites doses de produit sans que les moyens à mettre en oeuvre soient d'un prix de revient prohibitif.

Les objets de la présente invention seront encore mieux compris à l'aide de la description suivante d'un exemple de réalisation d'un doseur-distributeur conforme à l'invention, description faite en référence aux dessins annexés sur lesquels:
- la figure 1 est une vue schématique d'un doseur-distributeur incorporant deux variantes de réalisation, et
- les figures 2a à 2c sont des vues schématiques montrant plusieurs positions de fonctionnement d'un doseur-distributeur conforme à l'invention.

Tel que représenté sur les dessins annexés, le doseur-distributeur 1 comprend un bloc doseur unique 2 dont une enceinte 3 comporte, à la partie extrême supérieure, une ouverture latérale 4 raccordée en permanence par une conduite d'alimentation 5 à un premier réservoir de stockage non représenté contenant un premier produit pâteux et/ou liquide sous pression. Le fond de l'enceinte 3 présente une ouverture de sortie 6 qui est raccordée en permanence à l'entrée d'une deuxième enceinte 7, les deux enceintes 3 et 7 étant, le cas échéant, stériles.

La première enceinte 3 fait partie du bloc doseur unique 2 du doseur-distributeur 1 et la deuxième enceinte 7 fait partie d'un bloc distributeur 8. Le doseur-distributeur 1 comprend par bloc doseur 2 au moins deux blocs distributeurs 8 et par exemple trois blocs distributeurs dont les entrées 9 sont raccordées en parallèle à la sortie 6 du bloc doseur 2. La première enceinte 3 présente une configuration cylindrique et comporte, de haut en bas, une chambre supérieure d'alimentation 10 reliée en permanence à la conduite 5 et à travers celle-ci au premier réservoir de stockage, et une chambre inférieure de dosage 11. L'extrémité inférieure de la chambre d'alimentation 10 se raccorde à l'extrémité supérieure de la chambre de dosage 11 par un rétreint annulaire tronconique 12 se rétrécissant de haut en bas en direction de la chambre de dosage 11. Un piston-doseur 13 est monté de façon mobile dans la chambre de dosage 11 et peut y coulisser de façon étanche entre une position inférieure, dite position maximale de refoulement, et une position haute, dite position maximale d'aspiration, dans laquelle il se trouve juste en dessous du rétreint tronconique 12 et sépare la chambre d'alimentation 10 de la chambre de dosage 11. Ce piston-doseur 13 est fixé à la partie extrême inférieure d'un premier tube de commande 14 par l'intermédiaire d'un étrier 15. Ce piston-doseur 13 comporte un passage central 16 obturable par l'organe d'obturation tel qu'un clapet 17a d'une soupape d'admission 17. Le piston-doseur 13 comporte sur son pourtour un joint annulaire d'étanchéité 18.

Le premier tube de commande 14 traverse de façon étanche la paroi supérieure 3a de l'enceinte 3 et y est guidé axialement lors de ses mouvements alternativement ascendant et descendant commandés par exemple par un vérin à double effet 19. L'extrémité supérieure du premier tube de commande 14 est donc fixée au piston du vérin 19, par exemple pneumatique dont le cylindre est installé à poste fixe. Il faut noter que le mouvement descendant du piston-doseur 13 peut aussi être commandé par une barre transversale horizontale dont les extrémités sont articulées sur deux excentriques tournant de façon synchrone, la barre transversale agissant sur l'extrémité supérieure du premier tube de commande 14 pendant le mouvement descendant de celui-ci. Un tel mécanisme d'entraînement assurant la course de refoulement du piston-doseur 13 est décrit dans le brevet français 69 40 447 auquel on peut se rapporter pour plus de -détails. L'extrémité inférieure du premier tube de commande 14 est obturée de façon étanche vis-à-vis de l'intérieur de l'enceinte 3. Lorsque l'on utilise un mécanisme d'entraînement tel que décrit dans le brevet français 69 40 447 pour assurer le mouvement de refoulement du piston-doseur 13, le mouvement ascendant est assuré par exemple par la pression différentielle du produit agissant sur l'extrémité inférieure du premier tube de commande 14 lorsque la soupape d'aspiration 17 est ouverte. Le premier tube de commande 14 est entouré, sur son tronçon pénétrant dans l'enceinte 3, d'un premier soufflet 20 dont l'extrémité supérieure est fixée de façon étanche sur la paroi d'enceinte 3a traversée par ledit premier tube 14 et dont l'extrémité inférieure est fixée de façon étanche sur la partie extrême inférieure dudit premier tube 14. On utilise de préférence un soufflet 20 dont la structure est décrite dans la demande de brevet français n° 89 06 316 du 12 mai 1989.

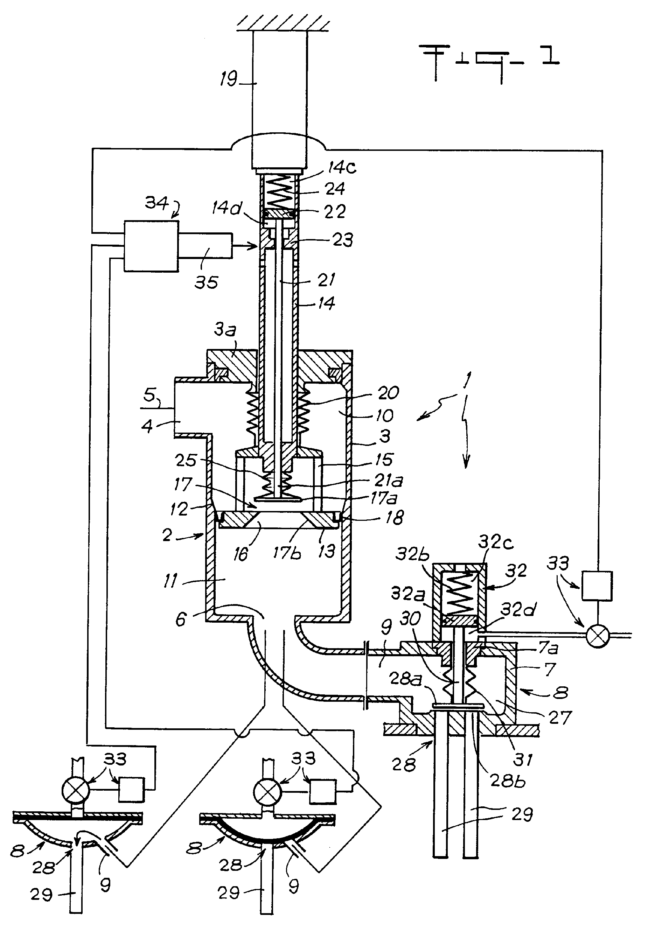

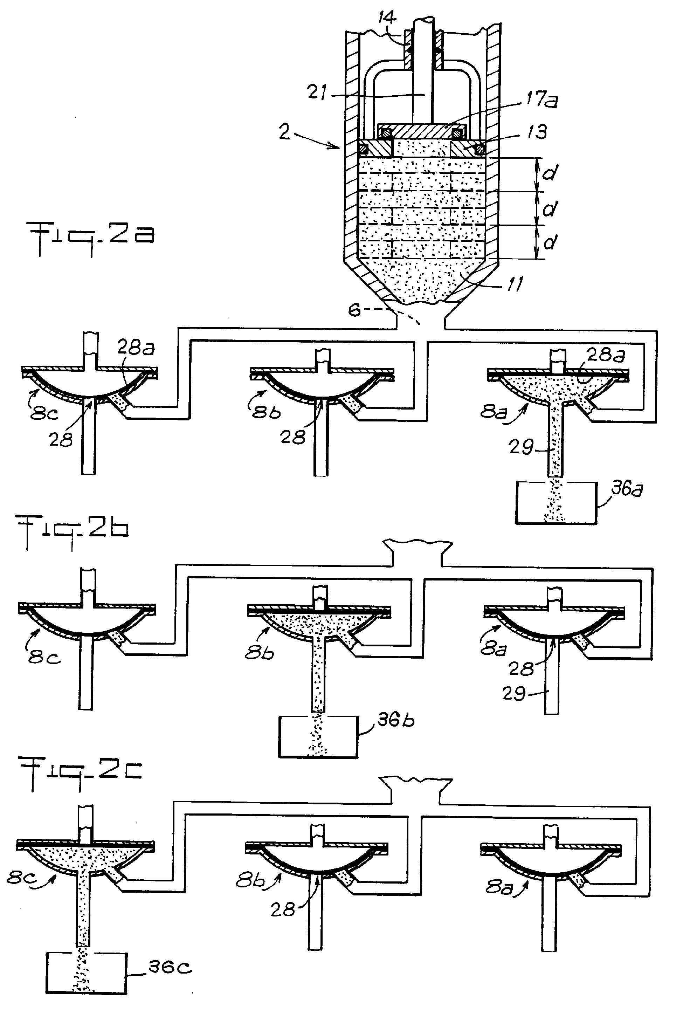

L'organe d'obturation 17a de la soupape d'admission 17 présente la forme d'un clapet et, par rapport au piston-doseur 13, est disposé du côté de la chambre d'alimentation 10, le bord supérieur du passage central 16 ménagé dans le piston-doseur 13 constituant le siège de soupape 17b de ladite soupape d'admission 13. Le passage central 16 du piston-doseur 13 présente avantageusement une forme troncônique qui s'élargit à partir de la chambre d'alimentation 10 vers la chambre de dosage 11. Le clapet d'admission 17a de la soupape d'admission 17 est disposé dans l'enceinte 3 entre l'extrémité inférieure du premier tube de commande 14 au voisinage de celui-ci, et le passage central 16 du piston-doseur 13 écarté d'une distance déterminée de l'extrémité inférieure dudit premier tube 14 tout en étant fixé sur celui-ci. En outre, ce clapet d'admission 17a est porté par l'extrémité inférieure fermée d'un deuxième tube de commande 21 guidé dans le premier tube de commande 14 et dépassant de l'extrémité inférieure de celui-ci en dessous de la bride circulaire de l'étrier 15. A son extrémité supérieure, le deuxième tube de commande 21 est associé à des moyens de commande distincts du dispositif de commande (par exemple 19) du premier tube de commande 14, ces moyens de commande comportant un piston 22 qui coulisse de façon étanche dans la partie extrême supérieure du premier tube de commande 14 et sépare l'intérieur de ladite partie extrême supérieure en une chambre supérieure 14c et une chambre inférieure 14d qui, à son extrémité inférieure, est délimitée par une cloison annulaire transversale 23 solidaire du premier tube de commande 14 et guidant de façon étanche la partie extrême supérieure du deuxième tube de commande 21. La chambre supérieure 14c est délimitée à son extrémité supérieure par le piston du vérin de commande 19, ce piston étant fixé de façon étanche à l'extrémité supérieure du premier tube de commande 14. Un ressort de rappel 24 est disposé dans la chambre supérieure 14c et en s'appuyant, d'une part, contre le piston du vérin 19 et, d'autre part, contre le piston 22 solidaire de l'extrémité supérieure du deuxième tube de commande 21, sollicite le clapet d'admission 17a en permanence contre son siège 17b, c'est-à-dire en direction de la fermeture de la soupape d'admission 17. La partie extrême inférieure 21a du deuxième tube de commande 21, partie extrême 21a dépassant de l'extrémité inférieure du premier tube de commande 14, est entourée par un deuxième soufflet 25 dont la structure est identique ou similaire à celle du soufflet 20 par exemple du type décrit en référence aux figures 1 et 2 de la demande de brevet français n° 89 06 316. L'extrémité supérieure du deuxième soufflet 25 est fixée de façon étanche sur l'extrémité inférieure du premier tube de commande 14 en dessous de la bride de l'étrier 15 et du premier soufflet 20, et l'extrémité inférieure dudit deuxième soufflet 25 est fixée de façon étanche soit sur l'extrémité inférieure dudit deuxième tube de commande 21, soit sur le clapet d'admission 17a solidaire dudit deuxième tube 21. De cette façon, l'extrémité inférieure du premier tube de commande 14 est obturée de façon étanche par rapport à l'intérieur de l'enceinte 3. L'espace annulaire entre la partie extrême inférieure du deuxième tube de commande 21 et le deuxième soufflet 25 est relié en permanence à l'atmosphère extérieure, par exemple à l'aide de plusieurs passages ménagés sous forme de fentes courtes ou d'orifices circulaires dans la partie extrême inférieure du deuxième tube 21 et dans le tronçon de tube restant à l'intérieur de l'espace du premier tube 14 en dessous de la cloison annulaire transversale 23, cet espace étant relié à l'atmosphère à travers un ou plusieurs orifices ménagés dans la paroi du premier tube 14 juste en dessous de ladite cloison 23. En outre, la chambre supérieure communique à travers un orifice central du piston 22 avec l'intérieur du deuxième tube de commande 21 et de ce fait avec l'atmosphère extérieure. La chambre inférieure de la partie extrême supérieure du premier tube de commande 14 peut être reliée alternativement à une source d'air comprimé ou à l'atmosphère extérieure à travers un orifice de raccordement prévu dans la paroi dudit tube 14 juste au dessus de la cloison transversale 23.

Grâce aux particularités qui viennent d'être décrites, les mouvements alternatifs du piston-doseur 13 s'effectuent sans produire des dépressions ou surpressions notables dans la chambre de dosage, le clapet d'admission 17a agissant automatiquement en tant que clapet d'échappement si pour une raison ou une autre la pression de refoulement appliquée à la quantité dosée du produit par le piston-doseur 13 dépasse une valeur prédéterminée. En outre, comme la fermeture de la soupape d'admission 17 est effectuée au moyen du deuxième tube de commande 21 par exemple en fin de course ascendante ou d'aspiration et avant le début de la course descendante ou de refoulement, le dosage du produit est fait avec une très grande précision. Par ailleurs, l'alimentation du produit sous une certaine pression assure le remplissage complet de la chambre de dosage 26 avec le produit sans apparition d'une dépression notable lors de la course ascendante du piston-doseur 13 à la soupape d'admission ouverte 17.

Le bloc distributeur 8 délimite dans la deuxième enceinte 7 une chambre de distribution 27 reliée à l'ouverture de sortie 6 de la chambre de dosage 11 et contient une soupape d'éjection 28 dont l'organe d'obturation 28a tel qu'un clapet ou une membrane assure l'obturation de l'extrémité supérieure d'au moins une tubulure d'éjection 29. Le clapet 28a est porté par l'extrémité fermée inférieure d'un troisième tube de commande 30 qui est de structure similaire à celle du premier tube de commande 14. Le tronçon du troisième tube de commande 30, tronçon pénétrant dans la chambre de distribution 27 ou autre chambre de transfert de la deuxième enceinte 7, est entouré d'un troisième soufflet 31 dont une extrémité est fixée sur la paroi d'enceinte 7a traversée de façon étanche par le troisième tube de commande 30 et dont l'autre extrémité est fixée de façon étanche sur l'organe d'obturation 28a ou sur le troisième tube 30 près de l'organe d'obturation 28a. Là encore, la structure de ce soufflet 31 peut être similaire ou identique à celle précédemment annoncée. L'espace annulaire entre le troisième tube 30 et le soufflet 31 est relié en permanence à l'atmosphère extérieure de la manière précédemment décrite.

L'extrémité du troisième tube de commande 30, extrémité opposée à la soupape d'éjection 28 et située toujours à l'extérieur de la chambre de distribution 27 ou enceinte similaire, porte le piston de commande 32a d'un vérin à simple effet 32 dont le ressort de rappel 32b agit sur ledit piston 45a et ainsi sur le troisième tube de commande 30 dans le sens de la fermeture de la soupape d'éjection 28 dont le siège 28b est constitué par l'extrémité supérieure de la ou des tubulures d'éjection 29. Le piston 32a sépare le volume du vérin 32 en deux chambres 32c et 32d dont celle (32c) contenant le ressort 32b est raccordée en permanence à l'atmosphère et dont l'autre (32d) est susceptible d'être raccordée alternativement soit à l'atmosphère extérieure, soit à une source d'air comprimé non représentée par l'intermédiaire d'une unité de commande 33 interposé entre, d'une part, la chambre 32d et, d'autre part, la source d'air comprimé ou l'atmosphère.

Lorsque l'on utilise au moins deux blocs distributeurs 8, on choisit pour la chambre, de dosage 10 un volume actif, c'est-à-dire un volume qui est balayé régulièrement par le piston-doseur 13 pendant la course d'aspiration et la course de refoulement de celui-ci, de telle sorte qu'il correspond à au moins deux doses entières du produit à distribuer quasi-simultanément à travers lesdits deux blocs distributeurs.

Le doseur-distributeur 1 comporte aussi un dispositif de synchronisation 34 qui coordonne les mouvements du premier tube de commande 14 et du second tube de commande 21 du piston-doseur 13, lors d'une même course de refoulement de ce dernier avec l'unité de commande 33 de la soupape d'éjection 28 de chacun des blocs distributeurs 8, de telle sorte que, pendant le refoulement d'une première dose de produit hors de la chambre de dosage 11 du bloc doseur unique 2, ne soit ouverte que la soupape d'éjection 28 du premier bloc distributeur 8, que pendant le refoulement de la deuxième dose de produit, ne soit ouverte que la soupape d'éjection 28 du deuxième bloc distributeur 8, et ainsi de suite, jusqu'à ce que tous les blocs distributeurs 8 aient débité chacun une dose de produit pendant la même course de refoulement du piston-doseur 13 du bloc doseur unique 2.

Le dispositif de synchronisation 34 comprend un détecteur 35 de la course de refoulement du premier tube de commande 14 du piston-doseur 13, la sortie dudit détecteur étant reliée cycliquement à chacune des unités de commande 33 des blocs distributeurs 8 pour commander l'ouverture des soupapes d'éjection 28 l'une après l'autre au début du refoulement de chacune des doses de produit lors d'une même course de refoulement du piston-doseur 13.

Le dispositif de commande 19 du premier tube de commande 14 associé au piston-doseur 13, les moyens de commande 22, 24 de la soupape d'admission 17 et les unités de commande 33 des blocs distributeurs 8 sont reliés à un générateur non représenté d'impulsions cycliques qui déclenche suivant un programme prédéterminé, les courses de refoulement et d'aspiration du piston-doseur 13, l'ouverture de la soupape d'admission 17 pendant la course d'aspiration et, le cas échéant, pendant la course de refoulement entre le refoulement de deux doses successives de produit, ainsi que l'ouverture successive de chacune des soupapes d'éjection 28 pendant la course de refoulement et pendant un laps de temps correspondant à l'éjection d'une dose de produit prédéterminée à travers un seul bloc distributeur 8, les soupapes d'éjection des autres blocs distributeurs restant maintenues fermées.

Dans une première phase de refoulement du piston-doseur 13, la soupape d'éjection 28 du premier bloc distributeur 8a relié à la sortie du bloc doseur 2, soupape 28 ayant une membrane 28a en tant qu'organe d'obturation, est ouverte et permet le remplissage dosé d'un premier récipient 36a pendant la première partie de la course de refoulement du piston-doseur 13, les soupapes d'éjection 28 des autres blocs-distributeurs 8b et 8c étant fermées.

Dans la deuxième phase de refoulement du piston-doseur 13, la soupape d'éjection 28 du deuxième bloc-distributeur 8b est ouverte et permet le remplissage dosé d'un deuxième récipient 36b, les soupapes d'éjection 28 des autres blocs-distributeurs 8a et 8c étant fermées et dans la troisième phase de refoulement dudit piston 13, la soupape d'éjection 28 du troisième bloc-distributeur 8c est ouverte et assure le remplissage dosé d'un troisième récipient 36c, les soupapes d'éjection 28 des autres blocs-distributeurs 8a et 8b étant fermées.

Pendant la course ascendante du piston-doseur 13, la soupape d'admission 17 est ouverte après avoir été fermée pendant toutes les phases de refoulement, et les soupapes d'éjection 28 de tous les blocs-distributeurs 8a, 8b, 8c sont fermées. La longueur d d'une course partielle de refoulement peut être identique ou différente d'une course partielle à l'autre.

On peut aussi régler la quantité de produit des différentes doses de produit distribuées successivement pendant une même course de refoulement du piston-doseur 13 en ajustant simultanément le temps d'ouverture de la soupape d'éjection concernée 28 et le temps de fermeture des autres soupapes d'éjection 28 des autres blocs-distributeurs 8b, 8c, ou 8a, 8c ou 8a, 8b au temps de course partielle de refoulement nécessaire au piston-doseur 13 pour refouler la quantité de produit correspondant à une dose de produit prédéterminée.

Dans certains cas, il peut être opportun que, pendant la même course de refoulement du piston-doseur 13, on distribue des doses de produit différentes d'une dose à l'autre.

Selon une variante du procédé, on propose que, pendant la course de refoulement du piston-doseur 13, on ouvre pendant un court laps de temps la soupape d'admission 17 de ce dernier et simultanément l'on ferme ou maintient fermées les soupapes d'éjection 28 de tous les blocs distributeurs 8, 8a, 8b, 8c.

Encore selon une autre variante du procédé, il peut être avantageux que, pendant la course de refoulement du piston-doseur 13 à soupape d'admission ouverte 17, on ouvre la soupape d'éjection 28 d'un des blocs distributeurs 8a, 8a, 8b, 8c et l'on ferme simultanément et progressivement la soupape d'admission 17.

## Revendications

1. Doseur-distributeur (1) servant à distribuer des doses déterminées d'au moins un produit pâteux et/ou liquide contenu sous pression dans au moins un premier réservoir de stockage, du type comportant dans l'enceinte cylindrique (3) d'un bloc doseur (2), d'une part, une chambre supérieure d'alimentation (10) raccordée par une conduite d'alimentation (5) audit premier réservoir, et, d'autre part, une chambre inférieure de dosage (11) séparée de ladite chambre d'alimentation (10) par un piston-doseur (13) qui est fixé à l'extrémité inférieure d'un étrier de support (15) solidaire, à son autre extrémité, de l'extrémité inférieure d'un premier tube de commande (14) pénétrant de façon étanche dans ladite première enceinte (3), qui coulisse de façon étanche dans ladite première enceinte (3), et qui est muni d'un passage central (16) obturable par une soupape d'admission (17) dont l'organe d'obturation, tel qu'un clapet (17a), est porté par l'extrémité libre d'un deuxième tube ou tige de commande (21) dépassant de façon étanche de l'extrémité inférieure du premier tube de commande (14) et associé à des moyens de commande distincts (22, 24) du dispositif de commande (19) du premier tube de commande (14), cet organe d'obturation (17a) étant sollicité par un ressort de rappel (24) en direction de la fermeture de la soupape d'admission (17) et étant guidé par rapport audit piston (13) et coopèrant avec un siège de soupape (17b) entourant ledit passage central (16), au moins un bloc distributeur (8) comprenant une chambre de distribution (27) dont l'entrée (9) est raccordée à la sortie (6) de la chambre de dosage (11) et dont la sortie est raccordée à au moins une tubulure d'éjection (29), ainsi qu'une soupape d'éjection (28) dont l'organe d'obturation, tel qu'un clapet ou membrane (28a), coopère avec l'extrémité amont de chaque tubulure d'éjection (29), extrémité constituant le siège (28b) de ladite soupape d'éjection (28) et est associé à une unité de commande (33),
caractérisé en ce que
- un bloc doseur unique (2) est associé à au moins deux blocs distributeurs (8, 8a, 8b, 8c),
- la sortie de la chambre de dosage (11) est raccordée en parallèle à chacune des chambres de distribution (27) d'au moins deux blocs distributeurs (8, 8a, 8b, 8c),
- le volume actif de la chambre de dosage (11) du bloc doseur unique (2), volume balayé régulièrement par le piston-doseur (13) pendant la course d'aspiration et la course de refoulement de celui-ci, correspond à au moins deux doses entières de produit à distribuer à travers au moins deux blocs distributeurs distincts (8, 8a, 8b, 8c),
et qu'il comporte un dispositif de synchronisation (34) qui coordonne les mouvements du premier tube de commande (14) et du second tube de commande (21) respectivement du piston-doseur (13) et du clapet d'admission (17a), lors d'une même course de refoulement de ce dernier avec l'unité de commande (33) de la soupape d'éjection (28) de chacun des blocs distributeurs (8, 8a, 8b, 8c), de telle sorte que, pendant le refoulement d'une première dose de produit hors de la chambre de dosage (11) du bloc doseur unique (2), ne soit ouverte que la soupape d'éjection (28) du premier bloc distributeur (par exemple 8a), que pendant le refoulement de la deuxième dose de produit, ne soit ouverte que la soupape d'éjection (28) du deuxième bloc distributeur (par exemple 8b), et ainsi de suite, jusqu'à ce que tous les blocs distributeurs (8, 8a, 8b, 8c) aient débité chacun une dose de produit pendant la même course de refoulement du piston-doseur (13) du bloc doseur unique (2).

2. Doseur distributeur selon la revendication 1, caractérisé en ce que le dispositif de synchronisation (34) comprend un détecteur (35) de la course de refoulement du premier tube de commande (14) du piston-doseur (13), la sortie dudit détecteur étant reliée cycliquement à chacune des unités de commande (33) des blocs distributeurs (8, 8a, 8b, 8c) pour commander l'ouverture des soupapes d'éjection (28) l'une après l'autre au début du refoulement de chacune des doses de produit lors d'une même course de refoulement du piston-doseur (13).

3. Doseur distributeur selon la revendication 1, caractérisé en ce que le dispositif de commande (19) du premier tube de commande (14) associé au piston-doseur (13), les moyens de commande (22, 24) de la soupape d'admission (17) et les unités de commande (33) des blocs distributeurs (8, 8a, 8b, 8c) sont reliés à un générateur d'impulsions cycliques qui déclenche suivant un programme prédéterminé, les courses de refoulement et d'aspiration du piston-doseur (13), l'ouverture de la soupape d'admission (17) pendant la course d'aspiration et, le cas échéant, pendant la course de refoulement entre le refoulement de deux doses successives de produit, ainsi que l'ouverture successive de chacune des soupapes d'éjection (28) pendant la course de refoulement et un laps de temps correspondant à l'éjection d'une dose de produit prédéterminée.

4. Procédé de dosage d'un produit pâteux et/ou liquide contenu sous pression dans au moins un premier réservoir de stockage, à l'aide d'un doseur-distributeur (1) du type comportant dans l'enceinte cylindrique (3) d'un bloc doseur (2), d'une part, une chambre supérieure d'alimentation (10) raccordée par une conduite d'alimentation (5) audit premier réservoir, et, d'autre part, une chambre inférieure de dosage (11) séparée de ladite chambre d'alimentation (10) par un piston-doseur (13) qui est fixé à l'extrémité inférieure d'un étrier de support (15) solidaire, à son autre extrémité, de l'extrémité inférieure d'un premier tube de commande (14) pénétrant de façon étanche dans ladite première enceinte (3), qui coulisse de façon étanche dans ladite première enceinte (3), et qui est muni d'un passage central (16) obturable par une soupape d'admission (17) dont l'organe d'obturation, tel qu'un clapet (17a), est porté par l'extrémité libre (21a) d'un deuxième tube ou tige de commande (21) dépassant de façon étanche de l'extrémité inférieure du premier tube de commande (14) et associé à des moyens de commande (22, 24) distincts du dispositif de commande (19) du premier tube de commande (14), cet organe d'oburation (17a) étant sollicité par un ressort de rappel (22) en direction de la fermeture de la soupape d'admission (17) et étant guidé par rapport audit piston (13) et coopèrant avec un siège de soupape (17b) entourant ledit passage central (16), au moins un bloc distributeur (8, 8a, 8b, 8c) comprenant une chambre de distribution (27) dont l'entrée (9) est raccordée à la sortie (6) de la chambre de dosage (11) et dont la sortie est raccordée à au moins une tubulure d'éjection (29), ainsi qu'une soupape d'éjection (28) dont l'organe d'obturation, tel qu'un clapet ou membrane (28a), coopère avec l'extrémité amont de chaque tubulure d'éjection, extrémité constituant le siège (28b) de ladite soupape d'éjection (28) et est associé à une unité de commande (32, 33), doseur distributeur (1) dans lequel le bloc doseur unique (2) est associé à au moins deux blocs distributeurs (8, 8a, 8b, 8c), la sortie (6) de la chambre de dosage (11) est raccordée en parallèle à chacune des chambres de distribution (27) d'au moins deux blocs distributeurs (8, 8a, 8b, 8c), et le volume actif de la chambre de dosage (11) du bloc doseur unique (2), volume balayé régulièrement par le piston-doseur (13) pendant la course d'aspiration et la course de refoulement de celui-ci, correspond à au moins deux doses entières de produit à distribuer à travers au moins deux blocs distributeurs distincts (8, 8a, 8b, 8c),
caractérisé en ce que, pendant la même course de refoulement du piston doseur (13), on refoule une première dose de produit à travers un premier bloc distributeur (par exemple 8a) en ouvrant la soupape d'éjection (28) de ce dernier et en maintenant fermées les soupapes d'éjection (28) des autres blocs distributeurs (par exemple 8b, 8c), puis on refoule une deuxième dose de produit à travers un deuxième bloc distributeur (par exemple 8b) en ouvrant la soupape d'éjection (28) de ce dernier, et en fermant ou en maintenant fermées les soupapes d'éjection (28) des autres blocs distributeurs (par exemple 8a, 8c), et ainsi de suite jusqu'à la fin de la course maximale de refoulement du piston-doseur (13).

5. Procédé de dosage selon la revendication 4, caractérisé en ce que l'on règle la quantité de produit des différentes doses de produit distribuées successivement pendant une même course de refoulement du piston-doseur (13) en ajustant simultanément le temps d'ouverture de la soupape d'éjection concernée (28) et le temps de fermeture des autres soupapes d'éjection (28) au temps de course partielle de refoulement nécessaire au piston-doseur (13) pour refouler la quantité de produit correspondant à une dose de produit prédéterminée.

6. Procédé de dosage selon l'une des revendications 4 et 5, caractérisé en ce que pendant la même course de refoulement du piston-doseur (13), on distribue des doses de produit différentes d'une dose à l'autre.

7. Procédé de dosage selon l'une des revendications 4 à 6, caractérisé en ce que, pendant la course de refoulement du piston-doseur (13), on ouvre pendant un court laps de temps la soupape d'admission (17) de ce dernier et simultanément l'on ferme ou maintient fermées les soupapes d'éjection (28) de tous les blocs distributeurs (8, 8a, 8b, 8c).

8. Procédé de dosage selon la revendication 7, caractérisé en ce que, pendant la course de refoulement du piston-doseur (13) à soupape d'admission ouverte (17), on ouvre la soupape d'éjection (28) d'un des blocs distributeurs (8, 8a, 8b, 8c) et l'on ferme simultanément et progressivement la soupape d'admission (17).

## Patentansprüche

1. Dosier- und Abgabevorrichtung (1), die dazu dient, bestimmte Portionen mindestens eines unter Druck in mindestens einem ersten Reservoir enthaltenen pastösen und/oder flüssigen Produktes abzugeben, wobei die Dosier- und Abgabevorrichtung jener Art ist, die in dem zylindrischen Behältnis (3) eines Dosierblockes (2) einerseits eine obere Beschickungskammer (10), die über einen Beschickungskanal (5) mit jenem ersten Reservoir verbunden ist, und andererseits eine untere Dosierkammer (11) umfaßt, die von jener Beschickungskammer (10) durch einen Dosierkolben (13) getrennt ist, der am unteren Ende eines Stützbügels (15) befestigt ist, der an seinem anderen Ende fest mit dem unteren Ende einer dicht in jenes erste Behältnis (3) hineingehenden ersten Steuerröhre (14) verbunden ist, der dicht in jenem ersten Behältnis (3) gleitet und einen zentralen Durchgang (16) aufweist, der mittels eines Einlaßventils (17) verschließbar ist, dessen Verschlußglied, etwa eine Klappe (17a), von dem freien Ende einer zweiten Steuerröhre oder -stange (21) getragen wird, die dicht aus dem unteren Ende der ersten Steuerröhre (14) heraustritt und bestimmten Steuermitteln (22, 24) der Steuervorrichtung (19) der ersten Steuerröhre (14) zugeordnet ist, wobei dieses Verschlußglied (17a) von einer Rückholfeder (24) in Richtung Schließung des Einlaßventils (27) beaufschlagt, im Verhältnis zu jenem Kolben (13) geführt wird und mit einem jenen zentralen Durchgang (16) umgebenden Ventilsitz (17b) zusammenwirkt, wobei mindestens ein Abgabeblock (8) eine Abgabekammer (27) umfaßt, deren Eingang (9) mit dem Ausgang (6) der Dosierkammer (11) und deren Ausgang mit mindestens einem Ausstoßstutzen (29) verbunden ist, sowie ein Ausstoßventil (28), dessen Verschlußglied, etwa eine Klappe oder Membran (28a), mit dem den Sitz (28b) jenes Ausstoßventils bildenden oberen Ende jedes Ausstoßstutzens (29) zusammenwirkt und einer Steuereinheit (33) zugeordnet ist, dadurch gekennzeichnet, daß
- ein einziger Dosierblock (2) mindestens zwei Abgabeblöcken (8, 8a, 8b, 8c) zugeordnet ist,
- der Ausgang der Dosierkammer (11) mit jeder der Abgabekammem (27) von mindestens zwei Abgabeblöcken (8, 8a, 8b, 8c) parallel verbunden ist,
- das Aktivvolumen der Dosierkammer (11) des einzigen Dosierblockes (2), das regelmäßig durch den Dosierkolben (13) während seines Ansaughubes und seines Verdrängungshubes bewegt wird, mindestens zwei ganzen Produktportionen entspricht, die über mindestens zwei bestimmte Abgabeblöcke (8, 8a, 8b, 8c) abzugeben sind,
und daß sie eine Synchronisiereinrichtung (34) umfaßt, die die Bewegungen der ersten Steuerröhre (14) und der zweiten Steuerröhre (21) des Dosierkolbens (13) bzw. der Einlaßklappe (17a) bei demselben Verdrängungshub der letzteren mit der Steuereinheit (33) des Ausstoßventils (28) jedes der Abgabeblöcke (8, 8a, 8b, 8c) so koordiniert, daß während der Verdrängung einer ersten Produktportion aus der Dosierkammer (11) des einzigen Dosierblockes (2) nur das Ausstoßventil (28) des ersten Dosierblockes (z.B. 8a) geöffnet ist und während der Verdrängung der zweiten Produktportion nur das Ausstoßventil (28) des zweiten Abgabeblockes (z.B. 8b) geöffnet ist und so weiter, bis jeder der Abgabeblöcke (8, 8a, 8b, 8c) während desselben Verdrängungshubes des Dosierkolbens (13) des einzigen Dosierblockes (2) eine Produktportion ausgegeben hat.

2. Dosier- und Abgabevorrichtung nach Anspruch 1, dadurch gekennzeichnet, daß die Synchronisiervorrichtung (34) einen Detektor (35) für den Verdrängungshub der ersten Steuerröhre (14) des Dosierkolbens (13) umfaßt, wobei der Ausgang jenes Detektors zyklisch mit jeder der Steuereinheiten (33) der Abgabeblöcke (8, 8a, 8b, 8c) verbunden wird, um zu Beginn der Verdrängung jeder der Produktportionen während desselben Verdrängungshubes des Dosierkolbens (13) die Ausstoßventile (28) nacheinander aufzusteuern.

3. Dosier- und Abgabevorrichtung nach Anspruch 1, dadurch gekennzeichnet, daß die Steuervorrichtung (19) der dem Dosierkolben (13) zugeordneten ersten Steuerröhre (14), die Steuermittel (22, 24) des Einlaßventils (17) und die Steuereinheiten (33) der Abgabeblöcke (8, 8a, 8b, 8c) mit einem zyklische Impulse erzeugenden Impulsgeber verbunden sind, der nach einem vorbestimmten Programm die Verdrängungs- und Ansaughübe des Dosierkolbens (13), das Öffnen des Einlaßventils (17) während des Ansaughubes und gegebenenfalls während des Verdrängungshubes zwischen der Verdrängung von zwei aufeinanderfolgenden Produktportionen sowie das aufeinanderfolgende Öffnen jedes der Ausstoßventile (28) während des Verdrängungshubes und einer dem Ausstoß einer vorbestimmten Produktportion entsprechenden Zeitspanne auslöst.

4. Dosierverfahren fur ein unter Druck in mindestens einem ersten Reservoir enthaltenes pastöses und/oder flüssiges Produkt, mit Hilfe einer Dosier- und Abgabevorrichtung (1), die jener Art ist, die in dem zylindrischen Behältnis (3) eines Dosierblockes (2) einerseits eine obere Beschickungskammer (10), die über einen Beschickungskanal (5) mit jenem ersten Reservoir verbunden ist, und andererseits eine untere Dosierkammer (11) umfaßt, die von jener Beschickungskammer (10) durch einen Dosierkolben (13) getrennt ist, der am unteren Ende eines Stützbügels (15) befestigt ist, der an seinem anderen Ende fest mit dem unteren Ende einer dicht in jenes erste Behältnis (3) hineingehenden ersten Steuerröhre (14) verbunden ist, der dicht in jenem ersten Behältnis (3) gleitet und einen zentralen Durchgang (16) aufweist, der mittels eines Einlaßventils (17) verschließbar ist, dessen Verschlußglied, etwa eine Klappe (17a), von dem freien Ende (21a) einer zweiten Steuerröhre oder -stange (21) getragen wird, die dicht aus dem unteren Ende der ersten Steuerröhre (14) heraustritt und bestimmten Steuermitteln (22, 24) der Steuervorrichtung (19) der ersten Steuerröhre (14) zugeordnet ist, wobei dieses Verschlußglied (17a) von einer Rückholfeder (24) in Richtung Schließung des Einlaßventils (27) beaufschlagt, im Verhältnis zu jenem Kolben (13) geführt wird und mit einem jenen zentralen Durchgang (16) umgebenden Ventilsitz (17b) zusammenwirkt, wobei mindestens ein Abgabeblock (8, 8a, 8b, 8c) eine Abgabekammer (27) umfaßt, deren Eingang (9) mit dem Ausgang (6) der Dosierkammer (11) und deren Ausgang mit mindestens einem Ausstoßstutzen (29) verbunden ist, sowie ein Ausstoßventil (28), dessen Verschlußglied, etwa eine Klappe oder Membran (28a), mit dem den Sitz (28b) jenes Ausstoßventils (28) bildenden oberen Ende jedes Ausstoßstutzens (29) zusammenwirkt und einer Steuereinheit (32, 33) zugeordnet ist, und zwar einer Dosier- und Abgabevorrichtung, bei der der einzige Dosierblock (2) mindestens zwei Abgabeblöcken (8, 8a, 8b, 8c) zugeordnet ist, der Ausgang (6) der Dosierkammer (11) mit jeder der Abgabekammern (27) von mindestens zwei Abgabeblöcken (8, 8a, 8b, 8c) parallel verbunden ist, und das Aktivvolumen der Dosierkammer (11) des einzigen Dosierblockes (2), das regelmäßig durch den Dosierkolben (13) während seines Ansaughubes und seines Verdrängungshubes bewegt wird, mindestens zwei ganzen Produktportionen entspricht, die über mindestens zwei bestimmte Abgabeblöcke (8, 8a, 8b, 8c) abzugeben sind, dadurch gekennzeichnet, daß man während desselben Verdrängungshubes des Dosierkolbens (13) eine erste Produktportion über einen ersten Abgabeblock (z.B. 8a) verdrängt, indem man sein Ausstoßventil (28) öffnet und die Ausstoßventile (28) der anderen Abgabeblöcke (z.B. 8b, 8c) geschlossen halt, sodann eine zweite Produktportion über einen zweiten Abgabeblock (z.B. 8b) verdrängt, indem man sein Ausstoßventil (28) öffnet und die Ausstoßventile (28) der anderen Abgabeblöcke (z.B. 8a, 8c) schließt oder geschlossen hält und so weiter bis zum Ende des maximalen Verdrängungshubes des Dosierkolbens (13).

5. Dosierverfahren nach Anspruch 4, dadurch gekennzeichnet, daß man die Produktmenge der unterschiedlichen Produktportionen, die während desselben Verdrängungshubes des Dosierkolbens (13) nacheinander abgegeben werden, reguliert, indem gleichzeitig die Öffnungszeit des betroffenen Ausstoßventils (28) und die Schließzeit der anderen Ausstoßventile (28) auf die Teilverdrängungshubzeit eingestellt werden, die der Dosierkolben (13) zur Verdrängung der einer vorbestimmten Produktportion entsprechenden Produktmenge braucht.

6. Dosierverfahren nach Anspruch 4 oder 5, dadurch gekennzeichnet, daß man während desselben Verdrängungshubes des Dosierkolbens (13) voneinander verschiedene Produktportionen abgibt.

7. Dosierverfahren nach einem der Ansprüche 4 bis 6, dadurch gekennzeichnet, daß man während des Verdrängungshubes des Dosierkolbens (13) dessen Einlaßventil (17) kurzzeitig öffnet und gleichzeitig die Ausstoßventile (28) aller Abgabeblöcke (8, 8a, 8b, 8c) schließt oder geschlossen hält.

8. Dosierverfahren nach Anspruch 7, dadurch gekennzeichnet, daß man während des Verdrängungshubes des Dosierkolbens (13) mit geöffnetem Einlaßventil (17) das Ausstoßventil (28) eines der Abgabeblöcke (8, 8a, 8b, 8c) öffnet und gleichzeitig und schrittweise das Einlaßventil (17) schließt.

## Claims

1. Doser-dispenser (1) serving to dispense determined doses of at least one pasty and/or liquid product contained under pressure in at least a first storage reservoir, of the type comprising in the cylindrical housing (3) of a doser unit (2), on the one hand, an upper supply chamber (10) connected by a supply conduit (5) to said first reservoir and, on the other hand, a lower dosing chamber (11) separated from said supply chamber (10) by a doser-piston (13) which is fixed to the lower end of a supporting stirrup element (15) fast, at its other end, with the lower end of a first control tube (14) penetrating in tight manner in said first housing (3), which slides in tight manner in said first housing (3), and which is provided with a central passage (16) adapted to be obturated by an intake valve (17) of which the obturation member, such as a flap (17a), is borne by the free end of a second control tube or rod (21) projecting in tight manner from the lower end of the first control tube (14) and associated with control means (22, 24) distinct from the device (19) for controlling the first control tube (14), this obturation member (17a) being urged by a return spring (24) in the closing direction of the intake valve (17) and being guided with respect to said piston (13) and co-operating with a valve seat (17b) surrounding said central passage (16), at least one dispenser unit (8) comprising a dispensing chamber (27) of which the inlet (9) is connected to the outlet (6) of the dosing chamber (11) and of which the outlet is connected to at least one ejection tube (29), as well as an ejection valve (28) of which the obturation member, such as a flap or membrane (28a), co-operates with the upstream end of each ejection tube (29), which end constitutes the seat (28b) of said ejection valve (28) and is associated with a control unit (33),
characterized in that
- a single doser unit (2) is associated with at least two dispenser units (8, 8a, 8b, 8c),
- the outlet of the dosing chamber (11) is connected in parallel to each of the dispensing chambers (27) of at least two dispenser units (8, 8a, 8b, 8c),
- the active volume of the dosing chamber (11) of the single doser unit (2), which volume is swept regularly by the doser-piston (13) during the suction stroke and the delivery stroke thereof, corresponds to at least two whole doses of product to be dispensed through at least two distinct dispenser units (8, 8a, 8b, 8c), and in that it comprises a synchronization device (34) which co-ordinates the movements of the first control tube (14) and of the second contol tube (21) respectively of the doser-piston (13) and of the intake flap (17a), during the same delivery stroke thereof, with the unit (33) controlling the ejection valve (28) of each of the dispenser units (8, 8a, 8b, 8c), so that, during the delivery of a first dose of product out of the dosing chamber (11) of the single doser unit (2), only the ejection valve (28) of the first dispenser unit (for example 8a) is opened, that during the delivery of the second dose of product, only the ejection valve (28) of the second dispenser unit (for example 8b) is opened, and so on, until all the dispenser units (8, 8a, 8b, 8c) have each delivered a dose of product during the same delivery stroke of the doser-piston (13) of the single doser unit (2).

2. Doser-dispenser according to claim 1, characterized in that the synchronization device (34) comprises a detector (35) for detecting the delivery stroke of the first control tube (14) of the doser-piston (13), the output of said detector being cyclically connected to each of the control units (33) of the dispenser units (8, 8a, 8b, 8c) in order to control the opening of the ejection valves (28) one after the other at the beginning of delivery of each of the doses of product during the same delivery stroke of the doser-piston (13).

3. Doser-dispenser according to claim 1, characterized in that the control device (19) of the first control tube (14) associated with the doser-piston (13), the control means (22, 24) of the intake valve (17) and the control units (33) of the dispenser units (8, 8a, 8b, 8c) are connected to a cyclic impulse generator which triggers off, according to a predetermined program, the delivery and suction strokes of the doser-piston (13), the opening of the intake valve (17) during the suction stroke and, if necessary, during the delivery stroke between the delivery of two successive doses of product, as well as the successive opening of each of the ejection valves (28) during the delivery stroke and a lapse of time corresponding to the ejection of a predetermined dose of product.

4. Process for dosing a pasty and/or liquid product contained under pressure in at least a first storage reservoir, with the aid of a doser-dispenser (1) of the type comprising in the cylindrical housing (3) of a doser unit (2), on the one hand, an upper supply chamber (10) connected by a supply conduit (5) to said first reservoir, and, on the other hand, a lower dosing chamber (11) separated from said supply chamber (10) by a doser-piston (13) which is fixed to the lower end of a supporting stirrup element (15) fast, at its other end, with the lower end of a first control tube (14) penetrating in tight manner in said first housing (3), which slides in tight manner in said first housing (3), and which is provided with a central passage (16) adapted to be obturated by an intake valve (17) of which the obturation member, such as a flap (17a), is borne by the free end (21a) of a second control tube or rod (21) projecting in tight manner from the lower end of the first control tube (14) and associated with control means (22, 24) separate from the control device (19) of the first control tube (14), said obturation member (17a) being urged by a return spring (22) in the direction of closure of the intake valve (17) and being guided with respect to said piston (13) and co-operating with a valve seat (17b) surrounding said central passage (16), at least one dispenser unit (8, 8a, 8b, 8c) comprising a dispensing chamber (27) of which the inlet (9) is connected to the outlet (6) of the dosing chamber (11) and of which the outlet is connected to at least one ejection tube (29), as well as an ejection valve (28) of which the obturation member, such as a flap or membrane (28a), co-operates with the upstream end of each ejection tube, which end constitutes the seat (28b) of said ejection valve (28) and is associated with a control unit (32, 33), doser-dispenser (1) in which the single doser unit (2) is associated with at least two dispenser units (8, 8a, 8b, 8c), the outlet (6) of the dosing chamber (11) is connected in parallel to each of the dispensing chambers (27) of at least two dispenser units (8, 8a, 8b, 8c), and the active volume of the dosing chamber (11) of the single doser unit (2), which volume is regularly swept by the doser-piston (13) during the suction stroke and the delivery stroke thereof, corresponds to at least two whole doses of product to be dispensed through at least two distinct dispenser units (8, 8a, 8b, 8c), characterized in that during the same delivery stroke of the doser-piston (13), a first dose of product is delivered through a first dispenser unit (for example 8a) by opening the ejection valve (28) of the latter and maintaining closed the ejection valves (28) of the other dispenser units (for example 8b, 8c), then a second dose of product is delivered through a second dispenser unit (for example 8b) by opening the ejection valve (28) of the latter, and closing or maintaining closed the ejection valves (28) of the other dispenser units (for example 8a, 8c), and so on until the end of the maximum delivery stroke of the doser-piston (13).

5. Process of dosing according to claim 4, characterized in that the quantity of product of the different doses of product dispenses successively during the same delivery stroke of the doser-piston (13) is controlled by simultaneously adjusting the time of opening of the ejection valve in question (28) and the time of closure of the other ejection valves (28) to the time of partial delivery stroke, necessary for the doser-piston (13) to deliver the quantity of product corresponding to a predetermined dose of product.

6. Process of dosing according to one of claims 4 and 5, characterized in that doses of product different from one dose to the other are dispensed during the same delivery stroke of the doser-piston (13).

7. Process of dosing according to one of claims 4 to 6, characterized in that during the delivery stroke of the doser-piston (13), the intake valve (17) thereof is opened for a short lapse of time and, simultaneously, the ejection valves (28) of all the dispenser units (8, 8a, 8b, 8c) are closed or maintained closed.

8. Process of dosing according to claim 7, characterized in that, during the delivery stroke of the doser-piston (13) with open intake valve (17), the ejection valve (28) of one of the dispenser units (8, 8a, 8b, 8c) is opened and the intake valve (17) is closed simultaneously and progressively.
